# EUROPEAN PATENT SPECIFICATION

(11) **EP 3 280 862 B1**
(45) Date of publication and mention of the grant of the patent: **19.04.2023**
(21) Application number: 15718321.1
(22) Date of filing: 09.04.2015
(51) Int. Cl.: E05F 15/63

(54) **VEHICLE DOOR SYSTEM WITH POWER DRIVE MODULE**
FAHRZEUGTÜRSYSTEM MIT KRAFTANTRIEBSMODUL
SYSTÈME DE PORTIÈRE DE VÉHICULE AVEC MODULE D'ENTRAÎNEMENT DE PUISSANCE

(43) Date of publication of application: 14.02.2018
(60) Divisional application: 23151609.7
(73) Proprietor: MULTIMATIC INC., Markham, Ontario L3R 8B9 (CA)
(72) Inventor: GRUBER, Rudolf, Uxbridge, Ontario L9P 1R4 (CA); DANIELS, Andrew R., Sharon, Ontario L0G 1V0 (CA); NAGAMANY, Balathas, Markham, Ontario L3S 4P3 (CA)
(74) Representative: Marks & Clerk LLP
(86) International application number: PCT/US2015/025074
(87) International publication number: WO 2016/164023

(56) References cited:
- GB-A- 872 577
- US-A1- 2004 046 401
- US-A1- 2004 256 881

## Description

### BACKGROUND

This disclosure relates to an automated door for a vehicle, and more particularly, for a vehicle passenger door.

Increasingly power doors are being provided on vehicles, such as a rear liftgate to a cargo area of a sport utility vehicle or a sliding door on one or both sides of a minivan. A power drive module moves the liftgate or sliding door between opened and closed positions in response to an input from an electrical switch.

Typically, a passenger door is manually opened or closed by pushing or pulling on the door without the benefit of a power drive module. Passenger doors are conventionally held opened and closed using a door check. A passenger pushes a button or engages a handle which unlatches the door from the door pillar. The door check is interconnected between the frame and the door. The door check typically includes detents that define discrete door open positions, which hold the door open.

Power door modules have been applied to passenger doors, but these modules are rather complex. For example, a motor is used to selectively drive gears through a clutch, which opens and closes to couple and decouple the motor.

US2004046401 describes a door closing apparatus including a door, a driving unit, a door movement detection unit, an electrostatic switch that is mounted on the door for detecting a human's touching the door, and a judgment unit that judges whether the door is attempted to be closed.

### SUMMARY

According to the invention, an automotive door system includes a hinge that is configured to support a door. A switch is configured to provide a first input in response to a user request to automatically open or close the door. A power drive module includes a housing, a motor and a gearbox that is operatively coupled to the motor by a shaft member. An output shaft is operatively connected to the door and the gearbox. The output shaft is configured to provide an output torque that corresponds to a desired motion of the door about a hinge. A brake assembly is operatively connected to the shaft member. The brake assembly has a normally closed position in which the shaft member is grounded to the housing. The brake assembly includes an open position that corresponds to one of a door closing mode and a door opening mode. The brake assembly is in the open position in a door closing mode and a door opening mode.

The shaft member is configured to be rotatable relative to the housing in the open position. The brake assembly includes a holding torque in the normally closed position, and is configured such that a torque applied to the brake assembly above the holding torque permits the shaft member to rotate in either direction.

A position sensor is configured to detect rotation of the output shaft and to provide a second input in response thereto. The second input corresponds to a manually initiated movement of the door pivoting about the hinge that exceeds a holding torque of the brake assembly in the normally closed position.

In a further embodiment of the above, a controller is in communication with the switch, the motor, the brake assembly and the position sensor. The controller is configured to command the brake assembly to the open position and to command the motor to move the door automatically in response to the second input without a first input from the switch.

In a further embodiment of any of the above, the gearbox includes first and second gearboxes interconnected to one another by the shaft member. The first gearbox is coupled between the second gearbox and the motor.

In a further embodiment of any of the above, the brake assembly is arranged between the first and second gearboxes.

In a further embodiment of any of the above, a linkage assembly is connected to the output shaft and configured to be interconnected to a door pillar. The linkage assembly is configured to transmit the output torque to the door pillar to open or close the door.

In a further embodiment of any of the above, the position sensor is integrated with the motor. The position sensor is configured to detect rotation of the motor, which is indicative of rotation of the output shaft.

In a further embodiment of any of the above, the brake assembly includes a permanent magnet grounding the shaft member to the housing in the normally closed position. A coil is configured to overcome a magnetic flux of the permanent magnet to provide an open position that permits the shaft member to freely rotate relative to the housing.

In a further embodiment of the above, the coil is modulated to provide a desired release of the brake assembly corresponding to a desired door feel.

In a further embodiment of the above, the brake assembly includes a holding torque in the normally closed position, and the coil is configured to be modulated to decay the holding torque in relation to a pulse width modulation average voltage of the coil.

In a further embodiment of any of the above, a latch is in communication with the controller. The latch is configured to open and close with respect to a striker in response to a command from the controller.

In a further embodiment of any of the above, an attitude sensor is in communication with the controller. The attitude sensor is configured to provide an attitude of the vehicle. The controller is configured to regulate the brake assembly in response to a signal from the attitude sensor.

### BRIEF DESCRIPTION OF THE DRAWINGS

The disclosure can be further understood by reference to the following detailed description when considered in connection with the accompanying drawings wherein:
Figure 1A is a perspective view of a vehicle door with a power drive module mounted to a door pillar.
Figure 1B is an enlarged perspective view of the door illustrating a linkage assembly of the power drive module.
Figure 2 is a schematic view of a door system according to an embodiment of the invention, that uses the power drive module.
Figure 3A is a perspective view of the power drive module.
Figure 3B is a cross-sectional view of the power drive module taken along line 3B-3B of Figure 3A.
Figure 4 is a cross-sectional view of a brake assembly for the power drive module.
Figure 5 is a flow chart depicting a switch commanded opening in an automated door opening mode.
Figure 6 is a flow chart depicting a switch commanded closing in an automated door closing mode.
Figure 7 is a flow chart depicting a push/pull door commanded closing in a power manual opening mode.
Figure 8 is a flow chart depicting a push/pull door commanded opening in a power manual closing mode.
Figure 9A is a graph illustrating brake assembly voltage versus time.
Figure 9B is a graph illustrating brake assembly holding torque versus time according to the voltage-time relationship shown in Figure 9A.

### DETAILED DESCRIPTION

A conventional automotive vehicle 10 (only a portion shown) typically includes multiple doors 12 used for egress and ingress to the vehicle passenger compartment and/or cargo area. In the example, the door 12 is a passenger door. The door 12 is pivotally mounted by hinges 15 to a door pillar 14, such as an A-pillar or B-pillar, about which the door is movable between opened and closed positions. The door 12 has a cavity 16 that typically includes an impact intrusion beam, window regulator, and other devices. A power drive module 18 is arranged within the cavity 16, although the power drive module 18 can instead be arranged in the door pillar 14, if desired. Mounting the power drive module 18 near the hinges 15 minimizes the impact on door inertia.

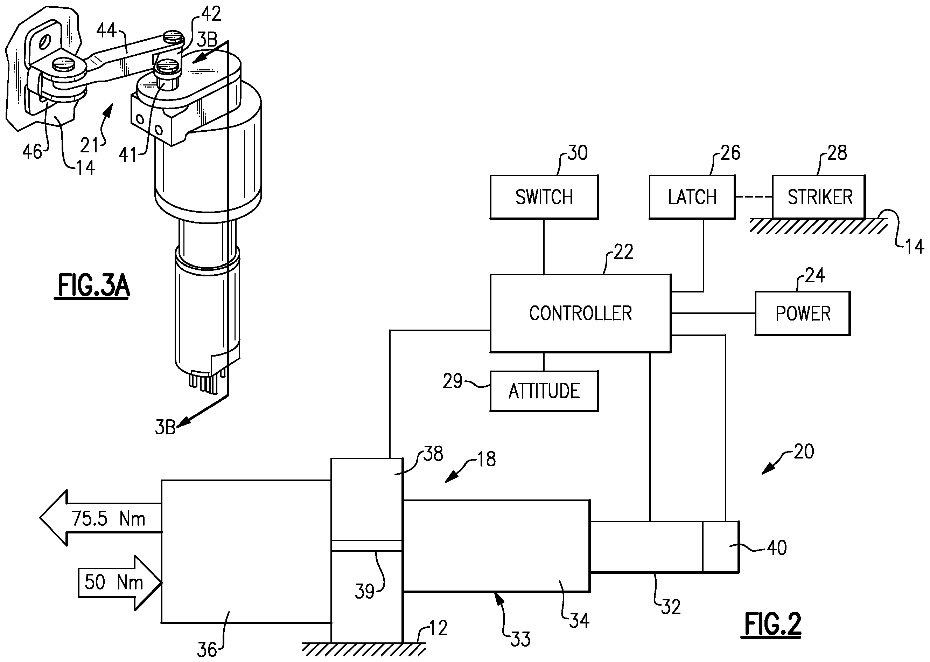

The power drive module 18 is part of a door system 20 (Figure 2) that permits automated opening and closing of the door 12 without the need of a user to manually push and pull on the passenger door, as is typical. However, the system 20 can be used as a conventional door, overriding the door check and automated opening and closing features. The system 20 may also act as a door hold, or door check, without the need of a typical door check that has discrete detents.

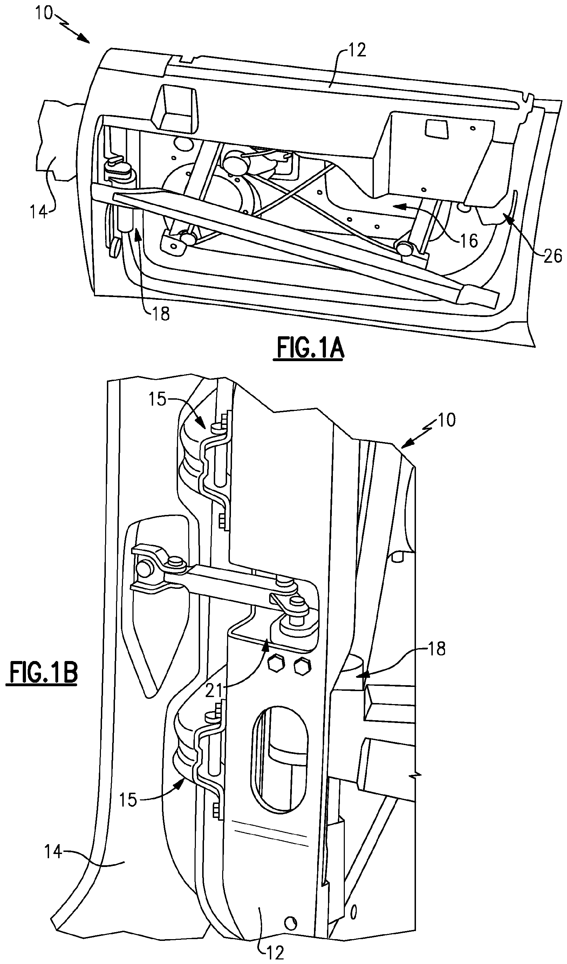

Referring to Figure 1B, the power drive module 18 is connected to the door pillar 14 by a linkage assembly 21. The linkage assembly 21 transmits the opening and closing forces provided by the power door module 18 to the door pillar 14 and also holds the door 12 open when desired.

Referring to Figure 2, the system 20 includes a controller 22, or electronic control unit (ECU), that receives inputs from various components as well as sends command signals to the power drive module 18 to open and close the door 12 in response to a user request. A power supply 24 is connected to the controller 22, which selectively provides electrical power to the power drive module 18 in the form of commands. A latch 26 and a switch 30 are also in communication with the controller 22. The latch 26, which is carried by the door 12 (Figure 1A), is selectively coupled and decoupled to a striker 28 mounted to the door pillar 14. In the example, the latch 26 is a power pull-in latch. The switch 30 provides a first input to the system 20 indicative of a user request to automatically open or close the door 12.

A vehicle attitude sensor 29 is in communication with the controller 22 and is used to detect the attitude of the vehicle, which is useful in controlling the motion of the door 12 when operated by the power drive module 18.

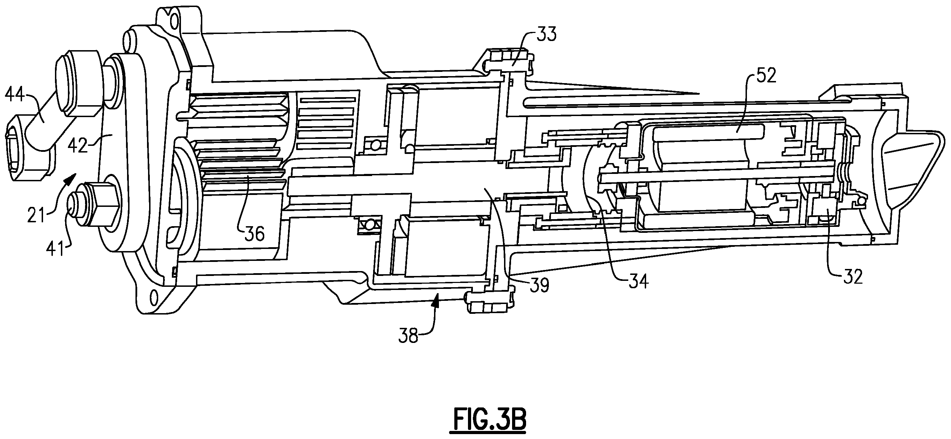

Referring to Figures 2 and 3B, the power door module 18 includes a motor 32 arranged within a housing 33. The housing 33 may be provided by one or more discrete structures secured to one another. In the example, the motor provides a relatively small amount of torque, for example, about 1/3 Nm. One example motor is available from Johnson Motor Company, Model No. 1999-1061255.

A gearbox is used to multiply the torque provided by the motor 32. In the example two gearboxes are used, although more or fewer gearboxes may be used. First and second gearboxes 34, 36 are arranged within the housing 33 and coupled to one another in series by a shaft member 39 in the example embodiment. The first gearbox 34 connects the motor 32 to the second gearbox 36. In one example, the first gearbox is a planetary gear set providing a 35:1 reduction ratio. The second gearbox 36 is a spur gear set providing a 6.25:1 reduction. Thus, the total gear ratio is 218.75:1, which in conjunction with type of gearboxes proposed, provides a fully back-drivable arrangement that does not require a clutch in the event of a desired manual operation of the door. Of course, it should be understood that other gear configurations and gear reductions may be provided.

A brake assembly 38 is positioned between the first and second gearboxes 34, 36 in the example shown, although the brake assembly 38 may be arranged in other locations. The brake assembly 38 is grounded to the door 12 via the housing 33 and is selectively connected to the shaft member 39. One suitable brake assembly is available from Sinfonia NC, Model No. ERS-260L/FMF. This brake assembly 38 provides a relatively small amount of holding torque, for example, 8 Nm, however, use of the second gearbox 36 provides a holding torque of about 50 Nm. Any torque applied to the brake assembly 38 above this threshold holding torque will cause the brake to slip, permitting the shaft member 39 to rotate.

The brake assembly 38 has a normally closed position in which the shaft member 39 is grounded to the housing 33 and prevented from rotating. The brake assembly 38 also includes an opened position corresponding to one of a door closing mode and a door opening mode. In the open position, the brake assembly 38 permits the shaft member 39 to rotate freely.

A position sensor 40, which is in communication with the controller 22, monitors the rotation of a component of the power drive module 18, for example, the motor 32. In one example, the position sensor 40 is an integrated Hall effect sensor that detects the rotation of a shaft of the motor 32.

Referring to Figure 3A, the second gearbox 36 rotationally drives an output shaft 41 coupled to the linkage assembly 21. In one example, the output shaft provides about 75 Nm of torque. A lever 42 is mounted to the output shaft 41 at one end and to a strap 44 at the other end. The strap 44 is pinned to a bracket 46 fastened to the door pillar 14. The linkage assembly 21 is designed to provide a holding torque of approximately the same as the desired door holding moment.

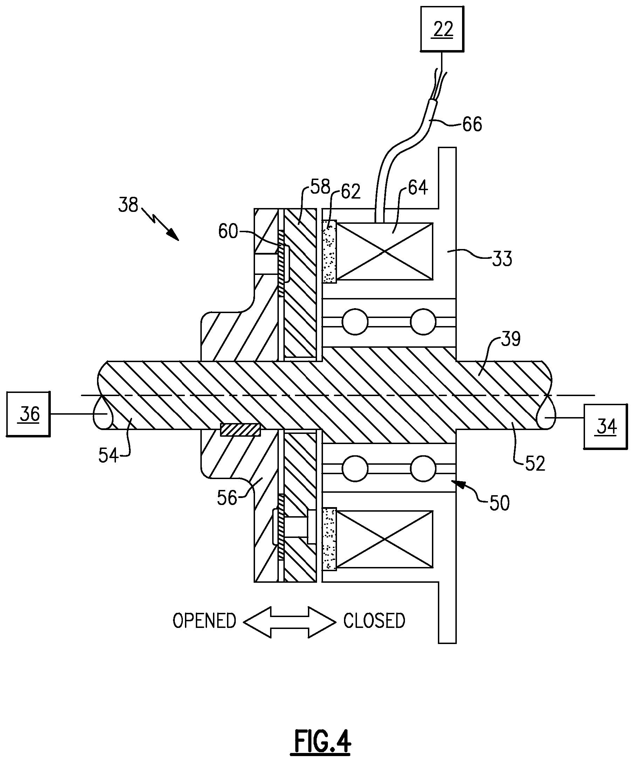

One example brake assembly 38 is shown in more detail in Figure 4. The shaft member 39 is carried by a bearing 50 mounted to the housing 33. One end 52 is connected to the first gearbox 34, and the other end 54 is connected to the second gearbox 36. A drive ring 56 is secured to the end 54 and supports a permanent magnet 58. A spring 60, which may be a leaf spring in one example, is arranged between the drive ring 56 and permanent magnet 58 to bias the permanent magnet 58 away from the housing 33. A magnetic field generated by the permanent magnet 58 pulls the drive ring 56 with a much greater force than the spring 60 toward the housing 33. Friction material 62 is supported by the housing 33 and engages the permanent magnet 58 in the normally closed position to provide the torque at which the permanent magnet 58 will slip with respect to the housing 33, again, about 8 Nm.

A magnetic flux circuit, or coil 64, is arranged within the housing 33 and communicates with the controller 22 via wires 66. When energized, the coil 64 creates a counteracting magnetic flux to the permanent magnet 58 that is sufficient to overcome the magnetic field of the permanent magnet 58, thus allowing the spring 60 to move the permanent magnet 58 out of engagement with the friction material 62 to the position shown in Figure 4. In this opened position, the shaft member 39 is permitted to rotate freely relative to the housing 33. The brake assembly components can be reconfigured in a manner different than described above and still provide desired selective brake hold torque.

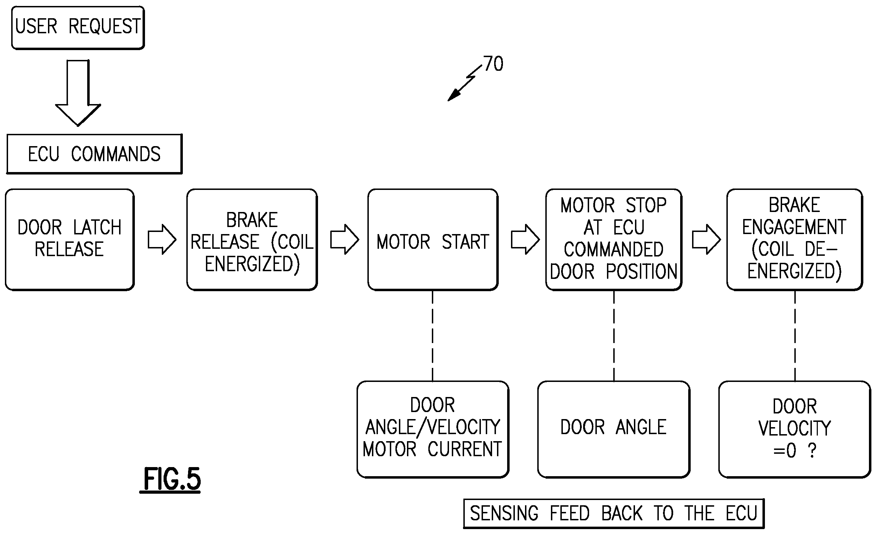

One example operating mode 70 is shown in Figure 5, with reference to Figure 2. The controller 22 receives a first input from the switch 30, such as a user request from an integrated door handle switch, keyless entry device or other input. In response to the first input, the latch 26 is commanded to release from the striker 28. The coil 64 (Figure 4) is energized to move the permanent magnet 58 to the opened position. The motor 32 rotationally drives the first gearbox 34 and the second gearbox 36 via the shaft member 39, which rotates freely relative to the housing 33. The position sensor 40 detects the angular position of the door 12 as well as door velocity.

The linkage assembly 21 swings the door 12 open to a limit position and the motor 32 is stopped by the controller using the position sensor 40. The coil 64 is deenergized to reengage the brake assembly 38.

With the brake assembly 38 in the normally closed position, a holding torque is generated to maintain the door 12 in its current position. In the absence of slippage in the brake assembly 38, the door velocity is detected as zero via the position sensor 40.

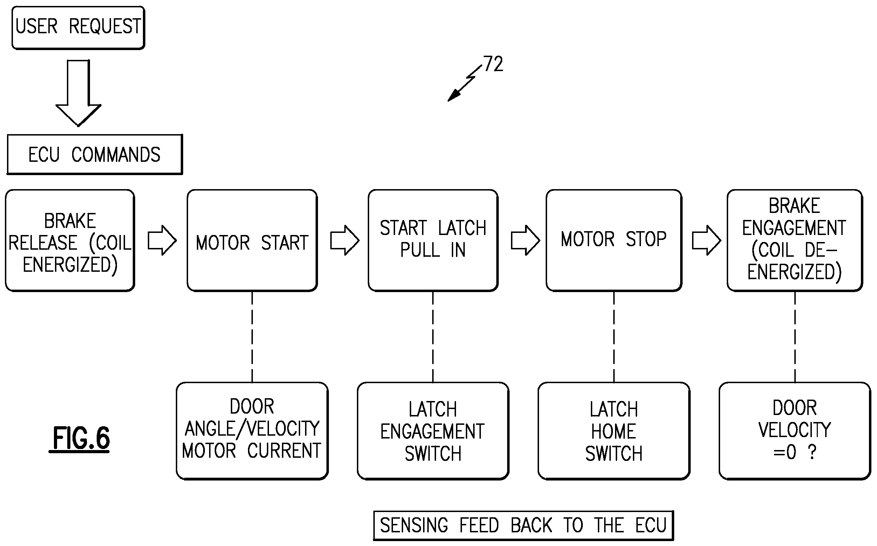

The automated door closing mode 72 is generally the reverse of the automated door opening mode and is shown schematically in Figure 6. The controller 22 energizes the coil 64 in response to a first input from the switch 30 to move the permanent magnet 58 to the opened position. The motor 32 rotationally drives the first gearbox 34 and the second gearbox 36 via the shaft member 39, which rotates freely relative to the housing 33. The position sensor 40 detects the angular position of the door 12 as well as door velocity.

The linkage assembly 21 swings the door 12 closed to a limit position, which corresponds to the closed position in which the striker 28 is received in the power pull-in latch 26. The latch 26 is commanded to pull the striker 28 in to fully close and seal the door 12 relative to the door opening. A latch "home" position is detected by the controller 22, for example, with a sensor in the latch 26, and the motor 32 is stopped. The coil 64 is deenergized to reengage the brake assembly 38, and the door velocity is detected as zero via the position sensor 40.

In addition to the automated opening and closing modes using a switch, the door may be opened and closed in a power manual mode by the user pushing or pulling on the door.

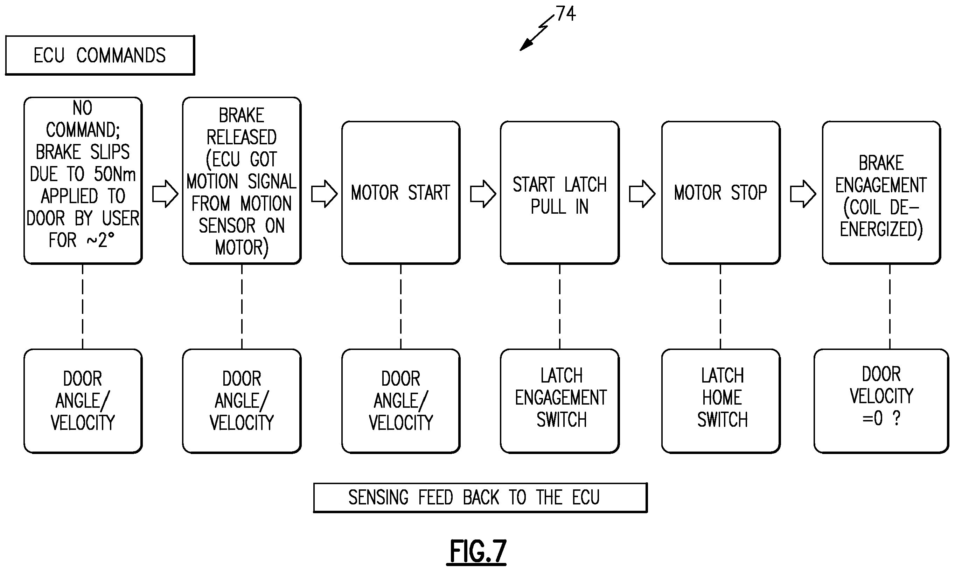

A power manual closing mode 74 is shown in Figure 7. Unlike the automated closing mode (Figure 6), no first input is received from the switch 30. Instead, with the door 12 already at least partially open, the door 12 is pushed or pulled closed by the user, which causes the linkage assembly 21 to rotate the output shaft 41 and back-drive second gearbox 36 and shaft member 39. When enough torque has been applied to slip the brake torque of the normally closed brake assembly 38 (in the example, 50 Nm), the shaft member 39 will rotate and back-drive the motor 32 via the first gearbox 34. An angular movement of the output shaft 41 is detected by the position sensor 40, which detects rotation of the motor 32 that is indicative of rotation of the output shaft 41.

A detected threshold angular movement, for example, 2°, provides a second input and is interpreted as a desired closing command by the controller 22. Of course, other angular thresholds can be used, if desired. The resolution of the position sensor 40 does not have to be particularly high, as small angular movements of the shaft member 39 are multiplied by the first and second gearbox 34.

Thus, in response to the second input from the position sensor 40 (and in the absence of a first input), the controller will command the motor 32 to rotationally drive the first gearbox 34 and the second gearbox 36 via the shaft member 39, which rotates freely relative to the housing 33 in the desired closing direction. Again, the position sensor 40 is used to detect the angular position of the door 12 as well as door velocity.

The linkage assembly 21 swings the door 12 closed to a limit position, which corresponds to the closed position in which the striker 28 is received in the power pull-in latch 26. The latch 26 is commanded to pull the striker 28 in to fully close and seal the door 12 relative to the door opening. A latch "home" position is detected by the controller 22, for example, with a sensor in the latch 26, and the motor 32 is stopped. The coil 64 is deenergized to reengage the brake assembly 38, and the door velocity is detected as zero via the position sensor 40.

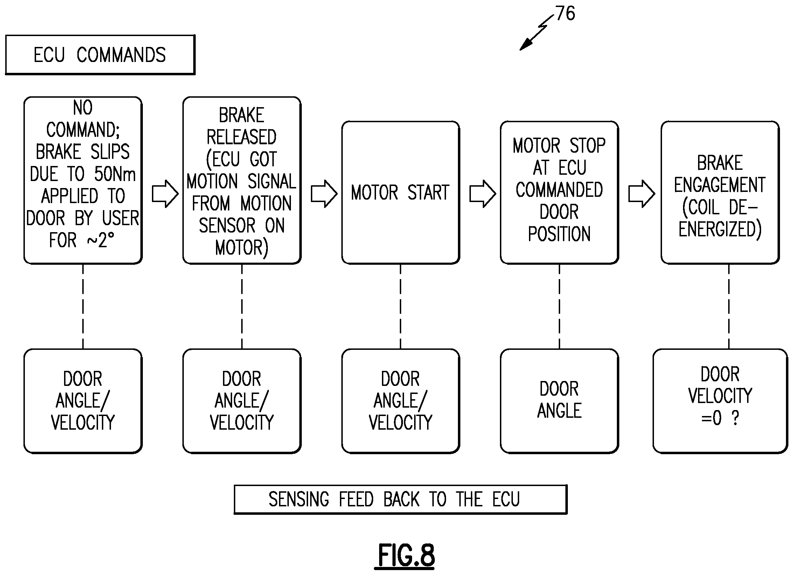

A power manual opening mode 76 is shown in Figure 8. Unlike the automated opening mode (Figure 5), no first input is received from the switch 30. Instead, with the door 12 already at least partially open, the door 12 is pushed or pulled open by the user, which causes the linkage assembly 21 to back-drive second gearbox 36 and shaft member 39. When enough torque has been applied to slip the brake torque of the normally closed brake assembly 38 (in the example, 50 Nm), the shaft member 39 will rotate and back-drive the motor 32 via the first gearbox 34. The angular movement is detected by the position sensor 40.

The threshold angular movement of 2° provides a second input and is interpreted as a desired opening command by the controller 22 based upon the direction of rotation detected. Thus, in response to the second input from the position sensor 40 (and in the absence of a first input), the controller 22 will command the motor 32 to rotationally drive the first gearbox 34 and the second gearbox 36 via the shaft member 39, which rotates freely relative to the housing 33. The position sensor 40 is used to detect the angular position of the door 12 as well as door velocity.

The linkage assembly 21 swings the door 12 open to a limit position, and the motor 32 is stopped by the controller using the position sensor 40. The coil 64 is deenergized to reengage the brake assembly 38.

With the brake assembly 38 in the normally closed position, a holding torque is generated to maintain the door 12 in the open position. In the absence of slippage in the brake assembly 38, the door velocity is detected as zero via the position sensor 40.

The automated door opening and closing modes and power manual opening and closing modes were described as door motion to either the fully open or fully closed door positions. However, the door 12 may also be moved between discrete positions that are not either fully open or closed. For example, if the user pushes or pulls on an open door when fully open, the power manual closing mode will begin to close the door 12. The user may then hold the door 12, preventing further movement of the door 12, which will be detected by the position sensor 40 and change the current in the motor 32. The controller 22 will then command the motor 32 to stop and de-energize the brake assembly 38, which will hold the door 12 where the user stopped the door 12.

The holding torque decay of the brake assembly 38 can be adjusted with pulse-width modulation of the coil 64. In one example, the vehicle attitude is detected with the attitude sensor 29 to vary the holding torque provided by the brake assembly 38 to provide a consistent holding torque regardless of vehicle incline or decline, which creates predictable door motion for the user. For example, a greater holding torque would be applied by the brake assembly 38 when the vehicle is on an incline than when the vehicle is on level ground.

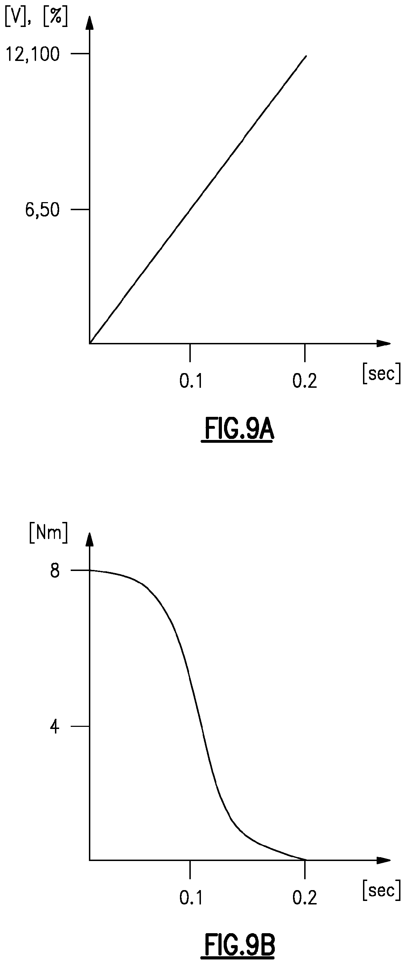

In a second example it may be desirable to "soft" release the brake assembly 38 to prevent an abrupt door movement that may cause an undesirable door feel for the customer. For example, 50 Nm of holding torque may produce a force in the linkage assembly 21 at the door pillar 14 of 700-900 N, which is capable of producing an audible sheet metal popping sound due to the sudden release of the stored hold moment energy. To address this potential undesired scenario, a soft release function is used, as shown in Figure 9A, to ramp the pulse-width modulation signal from the controller 22 over, for example, 0.2 seconds, to full strength. As a result, the electrical counter field to the permanent magnetic field is slowly increased, thus reducing the brake hold torque from full strength to released, as shown in Figure 9B, over the 0.2 seconds, which provides a "soft" release of the brake action. In the example, a gradual, linear increase in voltage provides a smooth, non-linear decay of holding torque. However, it should be understood that other voltage-torque-time relationships may be provided electrically and/or mechanically to provide a desired door feel.

It should also be understood that although a particular component arrangement is disclosed in the illustrated embodiment, other arrangements will benefit herefrom.

Although the different examples have specific components shown in the illustrations, embodiments of this invention are not limited to those particular combinations. It is possible to use some of the components or features from one of the examples in combination with features or components from another one of the examples, without departing from the scope of the appended claims.

Although an example embodiment has been disclosed, a worker of ordinary skill in this art would recognize that certain modifications would come within the scope of the claims. For that reason, the following claims should be studied to determine their true scope and content.

## Claims

1. An automotive door system (20) comprising:
a door (12);
a hinge (15) configured to support the door (12);
a switch (30) configured to provide a first input in response to a user request to automatically open or close the door;
a power drive module (18) including:
a housing (33);
a motor (32);
a gearbox (34,36) operatively coupled to the motor (32) by a shaft member (39);
an output shaft (41) operatively connected to the door (12) and the gearbox (34,36), the output shaft (41) configured to provide an output torque that corresponds to a desired motion of the door (12) about the hinge (15); and
a brake assembly (38) operatively connected to the shaft member (39), the brake assembly (38) having a normally closed position in which the shaft member (39) is grounded to the housing, wherein the brake assembly (38) includes an open position, the brake assembly (38) being in the open position in a door closing mode and a door opening mode, the shaft member (39) configured to be rotatable relative to the housing (33) in the open position, the brake assembly (38) including a holding torque in the normally closed position, and being configured such that a torque applied to the brake assembly (38) above the holding torque permits the shaft member (39) to rotate in either direction;
a position sensor (40) configured to detect rotation of the output shaft (41) and to provide a second input in response thereto, the second input corresponding to a manually initiated movement of the door (12) pivoting about the hinge (15) that exceeds the holding torque of the brake assembly (38) in the normally closed position.

2. The automotive door system according to claim 1, comprising a controller (22) in communication with the switch (30), the motor (32), the brake assembly (38) and the position sensor (40), the controller (22) configured to command the brake assembly (38) to the open position and to command the motor (32) to move the door (12) automatically in response to the second input without a first input from the switch (30).

3. The automotive door system according to claim 1, wherein the gearbox includes first (34) and second (36) gearboxes interconnected to one another by the shaft member (39), the first gearbox (34) coupled between the second gearbox (36) and the motor (32).

4. The automotive door system according to claim 3, wherein the brake assembly (38) is arranged between the first (34) and second (36) gearboxes.

5. The automotive door system according to claim 1, comprising a door pillar (14), a linkage assembly (21) connected to the output shaft (41) and configured to be interconnected to the door pillar (14) , the linkage assembly (21) configured to transmit the output torque to the door pillar (14) to open or close the door (12).

6. The automotive door system according to claim 2, comprising a latch (26) in communication with the controller (22), the latch (26) configured to open and close with respect to a striker (28) in response to a command from the controller (22).

7. The automotive door system according to claim 2, comprising an attitude sensor (29) in communication with the controller (22), the attitude sensor (29) configured to provide an attitude of the vehicle, the controller (22) configured to regulate the brake assembly (38) in response to a signal from the attitude sensor (29).

8. The automotive door system according to claim 1, wherein the position sensor (40) is integrated with the motor (32), the position sensor (40) configured to detect rotation of the motor (32), which is indicative of rotation of the output shaft (41).

9. The automotive door system according to claim 1, wherein the brake assembly (38) includes a permanent magnet (58) mounted on a drive ring (56) secured to the shaft member (39), the permanent magnet (58) grounding the drive ring (56) to the housing (33) in the normally closed position, and a coil (64) is configured to move the drive ring (56) to an open position to permit the shaft member (39) to freely rotate relative to the housing (33).

10. The automotive door system according to claim 9, wherein the coil (64) is modulated to provide a desired release of the brake assembly (38) corresponding to a desired door feel.

11. The automotive door system according to claim 10, wherein the brake assembly (38) includes a holding torque in the normally closed position, and the coil (64) is configured to be modulated to decay the holding torque in relation to a pulse width modulation average voltage of the coil (64).

## Patentansprüche

1. Kraftfahrzeugtürsystem (20), umfassend:
eine Tür (12);
ein Scharnier (15), das dafür konfiguriert ist, die Tür (12) zu tragen;
einen Schalter (30), der dafür konfiguriert ist, als Antwort auf eine Benutzeranforderung zum automatischen Öffnen oder Schließen der Tür eine erste Eingabe bereitzustellen;
ein Kraftantriebsmodul (18), welches einschließt:
ein Gehäuse (33);
einen Motor (32);
ein Getriebe (34, 36), das durch ein Wellenelement (39) betrieblich mit dem Motor (32) gekoppelt ist,
eine Abtriebswelle (41), die betrieblich mit der Tür (12) und dem Getriebe (34, 36) verbunden ist, wobei die Abtriebswelle (41) dafür konfiguriert ist, ein Abtriebsdrehmoment bereitzustellen, das einer erwünschten Bewegung der Tür (12) um das Scharnier (15) entspricht, und
eine Bremsbaugruppe (38), die betrieblich mit dem Wellenelement (39) verbunden ist, wobei die Bremsbaugruppe (38) eine normalerweise geschlossene Position aufweist, in der das Wellenelement (39) am Gehäuse angeschlossen ist, wobei die Bremsbaugruppe (38) eine offene Position einschließt, wobei die Bremsbaugruppe (38) in der offenen Position in einem Türschließmodus und einem Türöffnungsmodus ist, wobei das Wellenelement (39) dafür konfiguriert ist, in der offenen Position relativ zum Gehäuse (33) drehbar zu sein, wobei die Bremsbaugruppe (38) in der normalerweise geschlossenen Position ein Haltemoment einschließt und so konfiguriert ist, dass ein an die Bremsbaugruppe (38) angelegtes Drehmoment oberhalb des Haltemoments dem Wellenelement (39) erlaubt, sich in beide Richtungen zu drehen;
einen Positionssensor (40), der dafür konfiguriert ist, die Drehung der Abtriebswelle (41) zu ermitteln und als Antwort darauf eine zweite Eingabe bereitzustellen, wobei die zweite Eingabe einer manuell eingeleiteten Bewegung der um das Scharnier (15) schwenkenden Tür (12) entspricht, die das Haltemoment der Bremsbaugruppe (38) in der normalerweise geschlossenen Position überschreitet.

2. Kraftfahrzeugtürsystem nach Anspruch 1, umfassend eine Steuerungseinrichtung (22) in Kommunikation mit dem Schalter (30), dem Motor (32), der Bremsbaugruppe (38) und dem Positionssensor (40), wobei die Steuerungseinrichtung (22) dafür konfiguriert ist, als Antwort auf die zweite Eingabe automatisch ohne eine erste Eingabe vom Schalter (30) die Bremsbaugruppe (38) in die offene Position zu befehlen und dem Motor (32) zu befehlen, die Tür (12) zu bewegen.

3. Kraftfahrzeugtürsystem nach Anspruch 1, wobei das Getriebe ein erstes (34) und ein zweites (36) Getriebe einschließt, die durch das Wellenelement (39) miteinander verbunden sind, wobei das erste Getriebe (34) zwischen das zweite Getriebe (36) und den Motor (32) gekoppelt ist.

4. Kraftfahrzeugtürsystem nach Anspruch 3, wobei die Bremsbaugruppe (38) zwischen dem ersten (34) und dem zweiten (36) Getriebe angeordnet ist.

5. Kraftfahrzeugtürsystem nach Anspruch 1, umfassend eine Türsäule (14) und eine Gestängebaugruppe (21), die mit der Abtriebswelle (41) verbunden und dafür konfiguriert ist, mit der Türsäule (14) verbunden zu werden, wobei die Gestängebaugruppe (21) dafür konfiguriert ist, das Abtriebsdrehmoment auf die Türsäule (14) zu übertragen, um die Tür (12) zu öffnen oder zu schließen.

6. Kraftfahrzeugtürsystem nach Anspruch 2, umfassend einen Riegel (26) in Kommunikation mit der Steuerungseinrichtung (22), wobei der Riegel (26) dafür konfiguriert ist, sich als Antwort auf einen Befehl von der Steuerungseinrichtung (22) in Bezug auf einen Anschlag (28) zu öffnen und zu schließen.

7. Kraftfahrzeugtürsystem nach Anspruch 2, umfassend einen Lagesensor (29) in Kommunikation mit der Steuerungseinrichtung (22), wobei der Lagesensor (29) dafür konfiguriert ist, eine Lage des Fahrzeugs bereitzustellen, wobei die Steuerungseinrichtung (22) dafür konfiguriert ist, die Bremsbaugruppe (38) als Antwort auf ein Signal vom Lagesensor (29) zu regeln.

8. Kraftfahrzeugtürsystem nach Anspruch 1, wobei der Positionssensor (40) in den Motor (32) integriert ist, wobei der Positionssensor (40) dafür konfiguriert ist, eine Drehung des Motors (32) zu ermitteln, die eine Drehung der Abtriebswelle (41) kennzeichnet.

9. Kraftfahrzeugtürsystem nach Anspruch 1, wobei die Bremsbaugruppe (38) einen Permanentmagnet (58) einschließt, der an einem am Wellenelement (39) befestigten Antriebsring (56) angebracht ist, wobei der Permanentmagnet (58) in der normalerweise geschlossenen Position den Antriebsring (56) am Gehäuse (33) anschließt, und eine Spule (64) dafür konfiguriert ist, den Antriebsring (56) in eine offene Position zu bewegen, um dem Wellenelement (39) zu erlauben, sich relativ zum Gehäuse (33) frei zu drehen.

10. Kraftfahrzeugtürsystem nach Anspruch 9, wobei die Spule (64) moduliert wird, um eine erwünschte Freigabe der Bremsbaugruppe (38) bereitzustellen, die einem erwünschten Türgefühl entspricht.

11. Kraftfahrzeugtürsystem nach Anspruch 10, wobei die Bremsbaugruppe (38) in der normalerweise geschlossenen Position ein Haltemoment einschließt und die Spule (64) dafür konfiguriert ist, moduliert zu werden, um das Haltemoment im Verhältnis zu einer pulsdauermodulierten Durchschnittsspannung der Spule (64) abzubauen.

## Revendications

1. Système de portière d'automobile (20) comprenant :
une portière (12),
une charnière (15) configurée pour supporter la porte (12),
un commutateur (30) configuré pour fournir une première entrée en réponse à une demande d'utilisateur pour ouvrir ou fermer automatiquement la portière,
un module d'entrainement de puissance (18) incluant :
un logement (33),
un moteur (32),
une boîte d'engrenage (34, 36) couplée fonctionnellement au moteur (32) par un élément d'arbre (39),
un arbre de sortie (41) relié fonctionnellement à la portière (12) et à la boîte d'engrenage (34, 36), l'arbre de sortie (41) étant configuré pour fournir un couple de sortie qui correspond à un mouvement désiré de la portière (12) autour de la charnière (15), et
un ensemble de frein (38) relié de manière fonctionnelle à l'élément d'arbre (39), l'ensemble de frein (38) ayant une position normalement fermée dans laquelle l'élément d'arbre (39) est ancré au logement, dans lequel l'ensemble de frein (38) inclut une position ouverte, l'ensemble de frein (38) étant dans la position ouverte dans un mode de fermeture de portière et un mode d'ouverture de portière, l'élément d'arbre (39) étant configuré pour pouvoir tourner par rapport au logement (33) dans la position ouverte, l'ensemble de frein (38) incluant un couple de maintien dans la position normalement fermée, et étant configuré de telle manière qu'un couple appliqué à l'ensemble de frein (38) au-dessus du couple de maintien permet à l'élément d'arbre (39) de tourner dans l'une ou l'autre direction,
un capteur de position (40) configuré pour détecter la rotation de l'arbre de sortie (41) et pour fournir une deuxième entrée en réponse à celle-ci, la deuxième entrée correspondant à un mouvement de pivotement de la portière (12) autour de la charnière (15) initié manuellement qui est supérieur au couple de maintien de l'ensemble de frein (38) dans la position normalement fermée.

2. Système de portière d'automobile selon la revendication 1, comprenant un contrôleur (22) en communication avec le commutateur (30), le moteur (32), l'ensemble de frein (38) et le capteur de position (40), le contrôleur (22) étant configuré pour commander l'ensemble de frein (38) vers la position ouverte et pour commander au moteur (32) de déplacer la porte (12) automatiquement en réponse à la deuxième entrée sans une première entrée du commutateur (30).

3. Système de portière d'automobile selon la revendication 1, dans lequel la boîte d'engrenage inclut des première (34) et deuxième (36) boîtes d'engrenage interconnectées l'une à l'autre par l'élément d'arbre (39), la première boîte d'engrenage (34) étant couplée entre la deuxième boîte d'engrenage (36) et le moteur (32).

4. Système de portière d'automobile selon la revendication 3, dans lequel l'ensemble de frein (38) est agencé entre les première (34) et deuxième (36) boîtes d'engrenage.

5. Système de portière d'automobile selon la revendication 1, comprenant un montant de portière (14), un ensemble de tringlerie (21) connecté à l'arbre de sortie (41) et configuré pour être interconnecté au montant de portière (14), l'ensemble de tringlerie (21) étant configuré pour transmettre le couple de sortie au montant de porte (14) pour ouvrir ou fermer la portière (12).

6. Système de portière d'automobile selon la revendication 2, comprenant un verrou (26) en communication avec le contrôleur (22), le verrou (26) étant configuré pour ouvrir et fermer en rapport à un taquet (28) en réponse à une commande du contrôleur (22).

7. Système de portière d'automobile selon la revendication 2, comprenant un capteur d'attitude (29) en communication avec le contrôleur (22), le capteur d'attitude (29) étant configuré pour fournir une attitude du véhicule, le contrôleur (22) étant configuré pour réguler l'ensemble de frein (38) en réponse à un signal provenant du capteur d'attitude (29).

8. Système de portière d'automobile selon la revendication 1, dans lequel le capteur de position (40) est intégré au moteur (32), le capteur de position (40) étant configuré pour détecter une rotation du moteur (32) qui indique une rotation de l'arbre de sortie (41).

9. Système de portière d'automobile selon la revendication 1, dans lequel l'ensemble de frein (38) inclut un aimant permanent (58) monté sur un anneau d'entrainement (56) fixé à l'élément d'arbre (39), l'aimant permanent (58) ancrant l'anneau d'entrainement (56) au logement (33) dans la position normalement fermée, et une bobine (64) est configurée pour déplacer l'anneau d'entrainement (56) vers une position ouverte pour permettre à l'élément d'arbre (39) de tourner librement par rapport au logement (33).

10. Système de portière d'automobile selon la revendication 9, dans lequel la bobine (64) est modulée pour fournir un relâchement souhaité de l'ensemble de frein (38) correspondant à une sensation de portière souhaitée.

11. Système de portière d'automobile selon la revendication 10, dans lequel l'ensemble de frein (38) inclut un couple de maintien dans la position normalement fermée, et la bobine (64) est configurée pour être modulée pour affaiblir le couple de maintien en rapport avec une tension moyenne de modulation de largeur d'impulsion de la bobine (64).
